# EUROPEAN PATENT SPECIFICATION

(11) **EP 1 675 754 B1**
(45) Date of publication and mention of the grant of the patent: **09.01.2008**
(21) Application number: 04775533.5
(22) Date of filing: 12.10.2004
(51) Int. Cl.: B60R 9/045

(54) **LOAD CARRIER FOOT**
LASTTRÄGERFUSS
SOCLE PORTEUR DE CHARGE

(30) Priority: 13.10.2003 SE 0302690
(43) Date of publication of application: 05.07.2006
(73) Proprietor: Thule Sweden AB, 330 33 Hillerstorp (SE)
(72) Inventor: KARLSSON, Peter, S-335 31 Gnosjö (SE)
(86) International application number: PCT/SE2004/001452
(87) International publication number: WO 2005/035315

(56) References cited:
- US-A- 4 106 680
- US-A1- 2001 013 528
- US-B1- 6 305 589

## Description

### Technical field

The present invention relates to a load carrier foot for connecting a load carrier bar to an elongated rail profile of a vehicle, having in the longitudinal direction of the rail an extending cavity, with an upwards turned opening, in which the width of the cavity across the longitudinal direction of the rail exceeding the width of the opening, whereby the cavity on each side of the opening having walls, which facing the bottom of the cavity, wherein the load carrier foot having a base part, which extends through the opening towards the bottom of the cavity and comprising a fastening device which by means of a clamping device is moved upwards to clamping connection with the walls when the base part being secured to the rail profile.

### State of the art

Load carrier feet of the above-described kind are previously known. The disadvantage with these previously known load carrier feet is however that the locking device may ends up in an incorrect position when being fastened against the walls, whereby an unsafe connection of the load carrier foot to the rail profile is created. When the locking device is located within the cavity it may not be established if the device lands in incorrect position. It may neither be actuated from the outside, why the user may not for certain establish if a safe connection of the load carrier foot to the rail profile comes about.
US 2001/0013 528 describes a load carrier foot according to the preamble of claim 1.

### Problem

Thus, there is a need of a load carrier foot, which is designed in such way that the locking device always ends up in a position in which the tightening device is tightened against the walls and which may be actuated in position from the outside of the rail profile, and is connected with an indication device, which may be observed from the outside of the rail profile and which disclose in which position the locking device is within the rail profile.

### Solution

The present invention overcomes the mentioned disadvantages with a load carrier foot of the introductory stated kind, which is characterized in that a connection means is firmly connected with the locking device and rotatable connected to the base part, and in that an elastic body is located between the base part and the connection means, which turns the connection means and the locking device to a position in which the locking device being located transverse relative the longitudinal direction of the rail profile when the base part is mounted to the cavity, and in which position the locking device certainly will be in contact with the walls when the locking device by the clamping device being clamped against the walls.

Further, the present invention being characterized in that the connection means having an arm of control, which is placed on the side of the base part that is located on the outside of the cavity of the rail profile.

In addition, the present invention is characterized by that the controlling arm being located in an indication position, where the locking device by the elastic body has been moved to the position in which it safely will be in engagement with the walls, when being tightened by the tightening device.

In addition, yet in addition the present invention is characterized in that the elastic device consists of a torsion spring.

Further, the present invention is characterized in that the connection means with the controlling arm may be twisted against the force from the elastic body, from the position of indication to a second position in which the locking device extends in essential same direction as the base part.

### Brief description of figures

A load carrier foot according to the present invention will hereinafter be described with reference to the appending figures, in which:
Fig.1 is an overall view of a vehicle with load carrier rods connected to the rail profile, with load carrier feet according to the present invention;
Fig.2 is a detailed view of a load carrier foot according to the present invention connected to a rail profile and in which figure an outer exterior cover, which covers the interior of the foot, has been omitted;
Fig.3 is an explosion view of the load carrier foot shown in figure 2, in which however, the load carrier bar has been omitted.
Fig.4 is an explosion view from which the base part of the load carrier foot, the connection means and the tightening plate being shown in detail and viewed from below of the base part;
Fig. 5 is a detailed view of the base part mounted to a rail profile, in which view the operating arm is located in its indication position;
Fig.6 is a view corresponding to figure 5, in which the operating arm is twisted to a second position;
Fig.7 is a view corresponding to figure 5, viewed from below and with the rail profile omitted;
Fig.8 is a view corresponding to figure 6, viewed from below and with the rail profile omitted;
Fig.9 is a view corresponding to figure 5, viewed from the position that is indicated with the arrow S in figure 5, and
Fig.10 is a view corresponding to figure 6, viewed from the position that is indicated with the arrow T in figure 6.

### Preferred embodiment

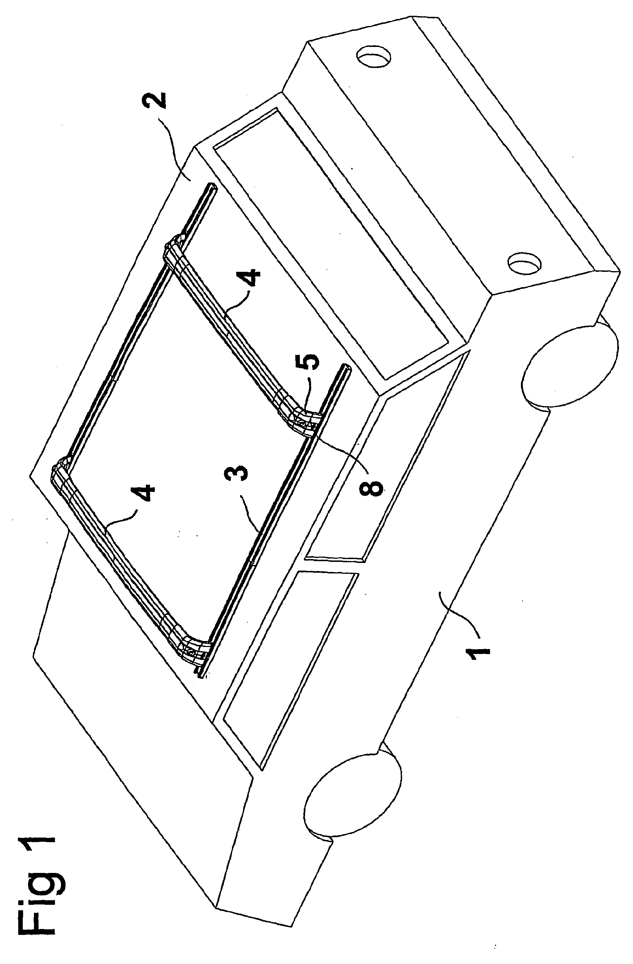

With reference to figure 1, a vehicle 1 being shown with elongated rail profiles 3 connected to the roof 2, and to which load carrier rods 4 provided with load carrier feet 5 according to the present invention are mounted.

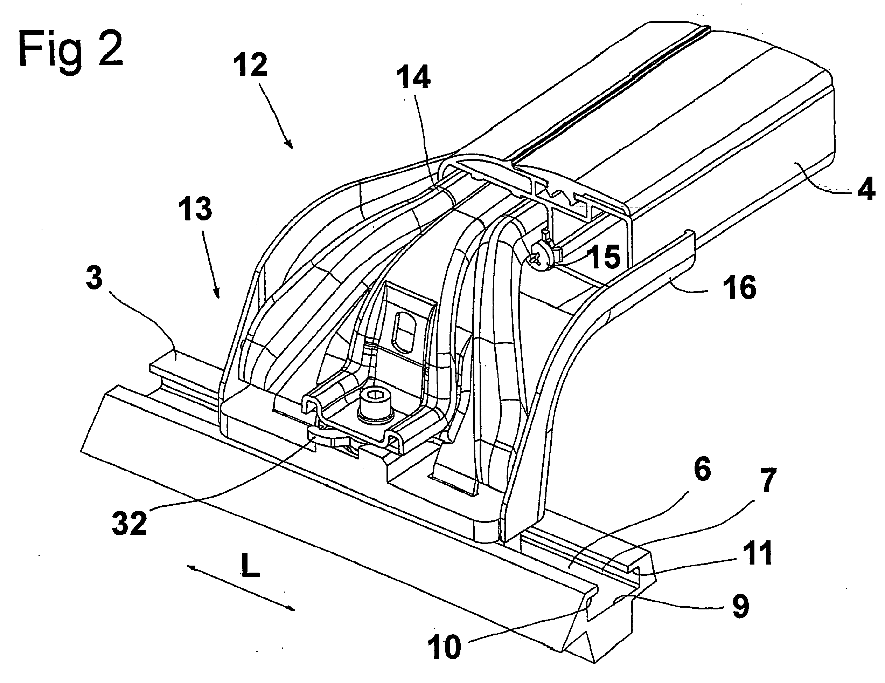

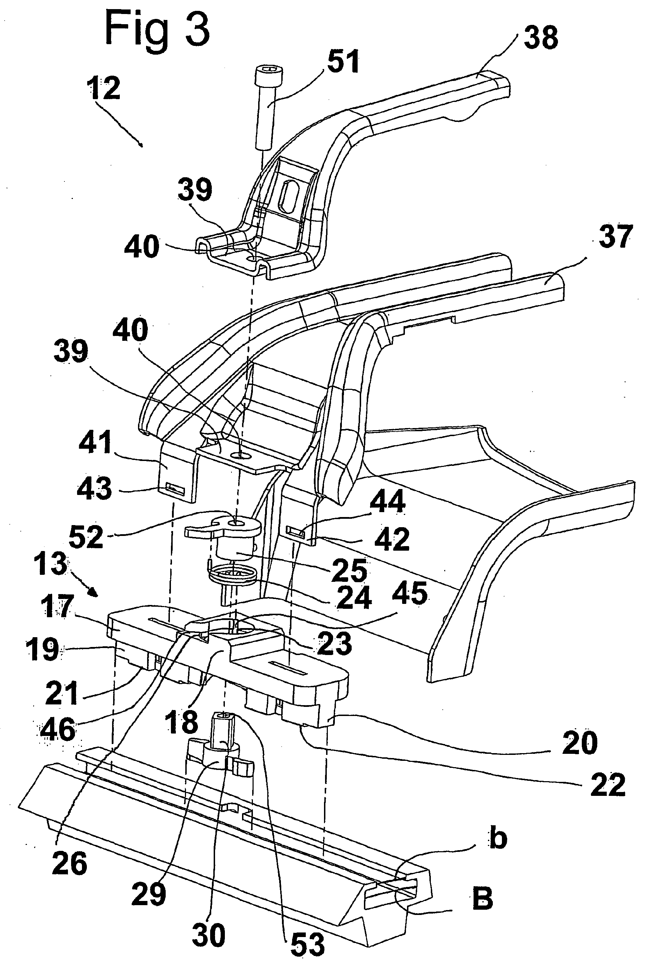

Figure 2 discloses a part of a rail profile 3, which longitudinal direction has been indicated with the double arrow L and to which a load carrier foot 5 is mounted. The rail profile has a cavity 6, with an upwards-turned opening 7, and in figure 3 the width of the cavity being indicated with B and the width of the opening with b. As appear from the figure the width of the cavities being larger than the width of the opening. The cover 8 which covers the inner part of the foot and which being shown in figure 1, and the only function of which is to provide an attractive exterior, is omitted in the figure. The bottom of the cavity 6 being indicated with 9 and the walls of the cavity, located adjacent to the opening, being indicated with 10 and 11 respectively, and as appear these are facing the bottom 9 of the cavity. The load carrier foot comprises a frame part 12 and a base part 13. The frame part is in an upper end 14, in known manner, connected to the load carrier bar 4 with bolts 15, of which only one being shown in the figure. The base part 13 is mounted to the rail profile in a known way, as will appear from below. Also a cover 16 appear in the figure, which is located on the inside and which extends between the base part and load carrier bar, and the function of which is, in the same manner as the cover 8, to make a attractive exterior.

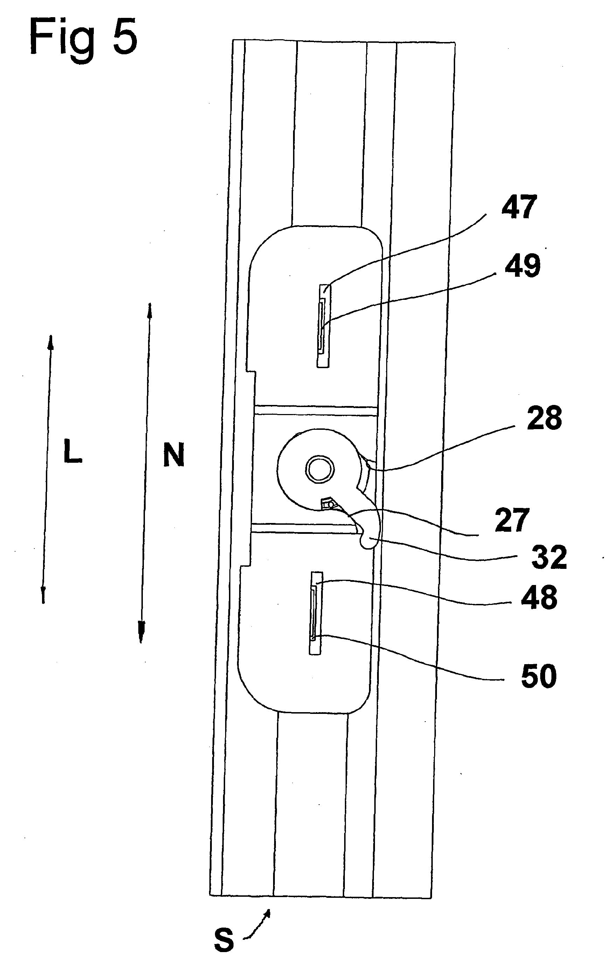

Figure 3 is an explosion view of the load carrier foot shown in figure 2, but with the load carrier bar 4 omitted. In the figure the base part 13 being shown, which comprises a flat part 17, which centrally having a block 18. Support shoulders 19, 20 are arranged on the underside of the part 17, which have a respective abutting surface 21, 22, whose function will be explained below. A cylindrical hole 23 extends through the block 18, in which an elastic body in form of a torsion spring 24 together with a cylinder 25 are mounted in a manner as will appear below. In the block 18 an opening 26 is formed which extends into the hole 23. The opening is defined by a first end surface 27 and a second end surface 28, which surfaces clearly being shown in figure 5. Below the part 17 a fastening device 29 being shown, which is firmly connected to a shaft 30, having a non-circularly cross section. The shaft is connected to the cylinder 25 in a way as will appear from the description below.

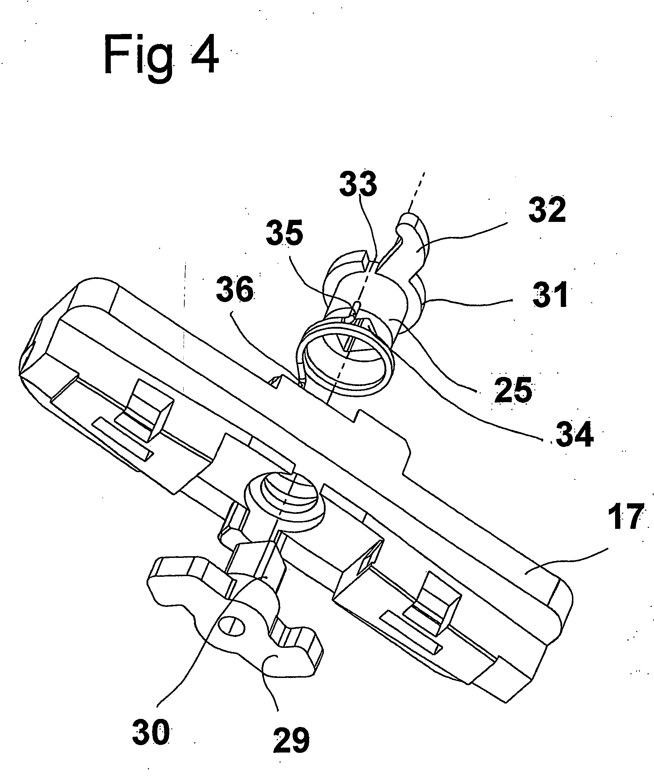

In figure 4 the base part and fastening device is viewed from below. From the figure appear that the cylinder 25 in its upper area having a flange 31 to which an arm 32 is connected and a notch 33 is formed in the flange 31. In the cylinder is further a recess 34 arranged, having a non-circularly cross section. From the figures the torsion spring 24 also appears, which have a first connecting pin 35 and a second connecting pin 36.

With further reference to figure 3 it also appear that the frame part 12 comprise a first bracket part 37 and a second bracket part 38, of which the second part is firmly connected to the first part, when the frame part is mounted to the base part. The connection of the second part to the first part may happen by welding, riveting, soldering or on every other suitable way. To the frame part is further arranged a first tab 39, through which is formed a hole 40, a second tab 41 and a third tab 42, which having a respective hatch 43, 44.

With reference to the figures 3 and 4, the assembly of the load carrying foot to the embodiment shown in figure 2 will be described. The torsion spring 24 is mounted to the cylinder 25 and the first connecting pin 35 is mounted in the notch 33. The cylinder with the torsion spring is moved into the through hole 23 and the second connecting pin 36 is mounted to a notch 45, formed in the circumferential surface of the hole 23. The cylinder is moved downwards so far into the hole 23, that the arm 32, will be in contact with the bottom surface 46 of the opening 26. Thereafter, the second and the third tab are mounted into the recesses 47 and 48, respectively, formed in the plate 17, and in connection to that the first tab 39 is located over the cylinder 25, whereby ensuring that the cylinder being held on place in the hole 23. The tabs 41 and 42, respectively, are connected firmly to the recesses 47 and 48, respectively, through that the hatches 43 and 44 will be in engagement with the knobs 49 and 50, respectively, arranged in the recesses 47 and 48, see figure 5. Finally the shaft 30 is located on the fastening device 29 in the opening 34, and a bolt 51 is moved through the hole 40 and a hole 52, formed in the shaft 25, to connection with a threaded hole 53 in the shaft, whereby the locking device over the shaft and the cylinder become turnable connected to the base part and with the bolt 51 tightly connected to the base part.

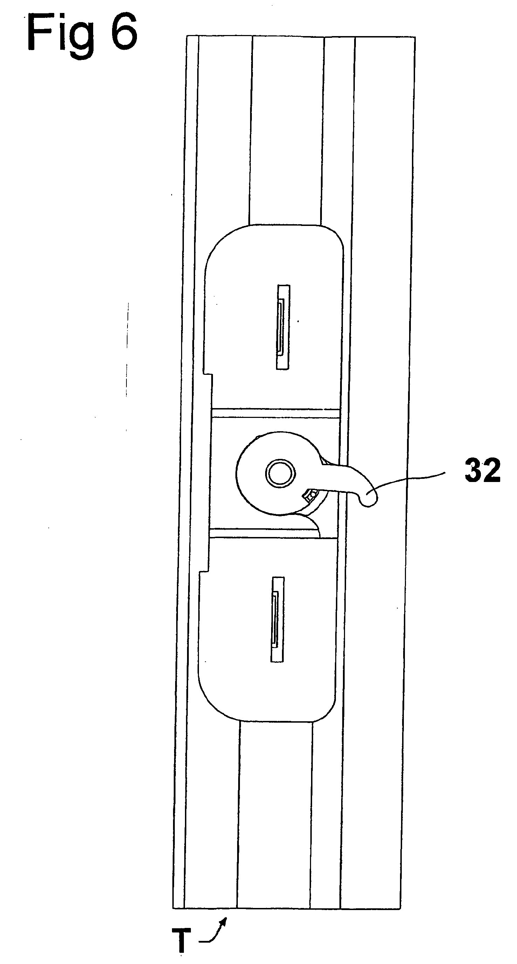

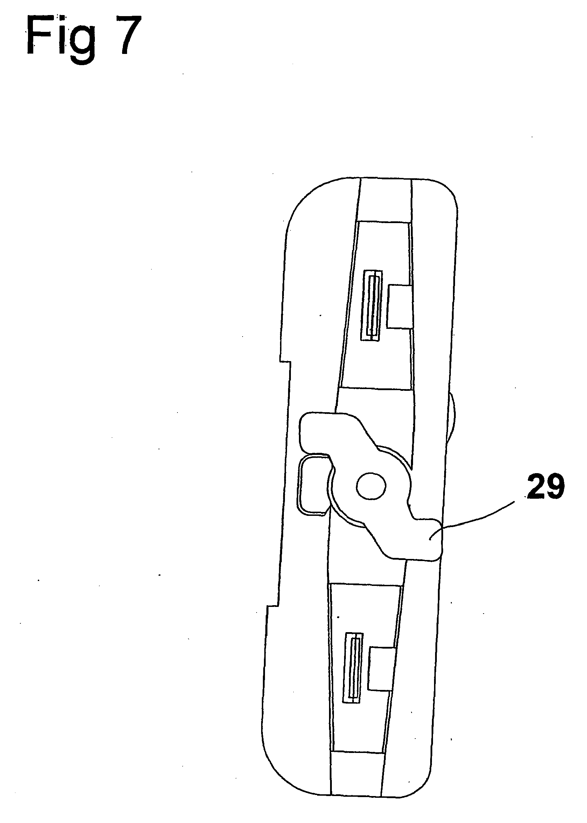

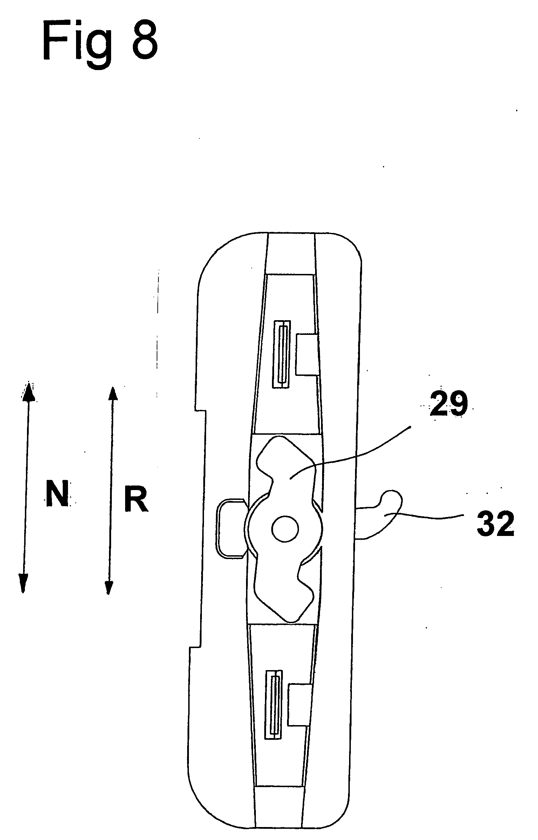

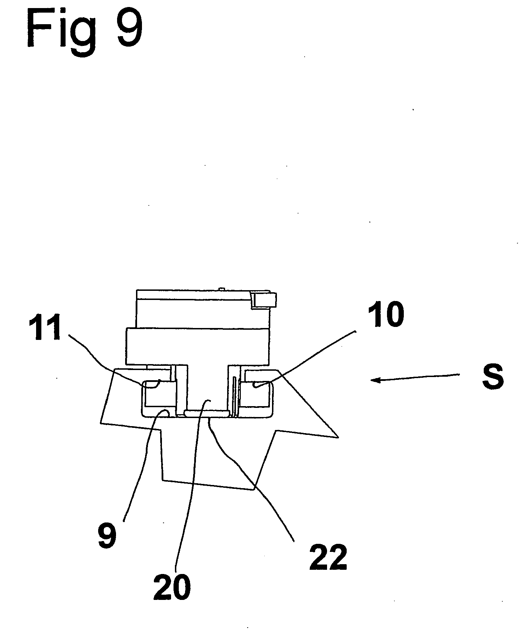

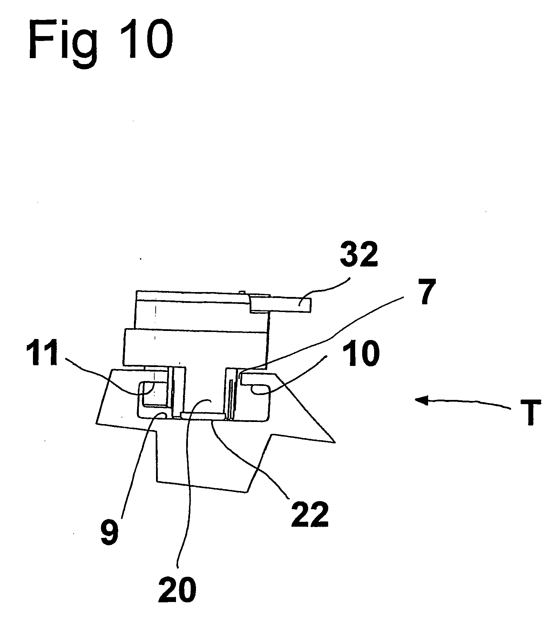

With reference to the figures 5-10, the function of the base part should hereafter be described. When the load carrier foot is mounted to the rail profile the arm 32 being turned against the force of the torsion spring to the position it has in figure 6. In this position, the locking device occupies the position that is shown in figure 8. The longitudinal direction of the locking device being indicated with the double arrow R and the longitudinal direction of the base part being indicated with the double arrow N. As appear from figure 5 and 8, in which the longitudinal direction of the rail profile also have been indicated, the direction L and N are parallel, and in the position that is shown in figure 8, the locking device thus extends in a parallel direction to the rail profile, and the base part may thus be mounted to the rail profile. When the base part has been mounted to the rail profile the support shoulders 19 and 20 extend through the opening 7 of the rail and the contact surfaces 21 and 22 is located on the bottom of the rail 9. Thereafter, the arm 32 is released and the torsion spring moves the arm to the position it has in figure 5. In this position the locking device occupies a transverse position relative the longitudinal direction L, which being shown in figure 7, and in this position the locking device is such located that it extends below the walls 10 and 11, which being shown in figure 9. Thereafter, the locking device is moved in direction against the walls 10 and 11 of the bolt 51, whereby the base part being pressed downwards against the bottom of the rail 9, whereby the base part become firmly connected to the rail profile.

With reference to figures 2 and 5, it appears from there that the arm 32 is located in a certain position, which is viewable from the outside of the rail profile, and in this position also the locking device is in a position in which it will be in engagement with the walls. If the arm should be located in the position shown in figure 6, the user will know that the locking device is misplaced and by moving the arm to the position shown in figure 2 assuring oneself that the locking device is in correct position. Thus, the arm 32 functioning as an indicating organ and in the indicating position, shown in figure 2 and 5, indicating that the locking device have the correct position, while in other positions the locking device is misplaced and may be dealt with by moving the arm 32 to the correct position.

## Claims

1. Load carrier foot (5) for connecting a load carrier bar (4) to an elongated rail profile (3) of a vehicle (1), having in the longitudinal direction (L) of the rail an extended cavity (6), with an upwards turned opening (7), in which the width (B) of the cavity across the longitudinal direction of the rail exceeding the width (b) of the opening, whereby the cavity on each side of the opening having walls (10, 11), which facing the bottom (9) of the cavity, whereby the load carrier foot having a base part (13), which extends through the opening towards the bottom of the cavity, and comprising a fastening device (29) which by means of a clamping device (51) is moved upwards to clamping contact with the walls when the base part being secured to the rail profile, **CHARCTERISED in that** a connection means (25,30) is firmly connected with the locking device (29) and turnable connected to the base part (13), and in that an elastic body (24) is located between the base part and the connection means, which turns the connection means and the locking device to a position in which the locking device being located transverse relative to the longitudinal direction (Fig. 7) of the rail profile when the base part is mounted to the cavity, and in which position the locking device certainly will be in contact with the walls (10, 11) when the locking device by the clamping device (51) being clamped against the walls.

2. Load carrier foot according to claim 1, **CHARCTERISED in that** the connection means (25,30) having a controlling arm (32) which is located on the side of the base part that is located outside the cavity of the rail profiles.

3. Load carrier foot according to claim 2, **CHARCTERISED in that** the controlling arm (32) is located in a indicating position (Fig.2) when the locking device (29) being moved by the elastic body (24) to the position in which it certainly will be in engagement with the walls, when being clamped by the clamping device.

4. Load carrier foot according to any of the previously claim, **CHARCTERISED in that** the elastic device consists of a torsion spring (24).

5. Load carrier foot according to any of the previously claim, **CHARCTERISED in that** the connection means (25,30) with the controlling arm (32) may twisted against the force from the elastic body (24) from the position of indication to a second position (Fig.8) in which the locking device extends essentially in the same direction as the base part, wherein the base part may be moved in and out of the opening of the rail profile.

## Patentansprüche

1. Lastträgerfuß (5) zum Verbinden einer Lastträgerstange (4) mit einer langgestreckten Profilschiene (3) eines Fahrzeugs (1), der eine sich in der Längsrichtung (L) der Schiene erstreckende Kavität (6) aufweist, mit einer aufwärts gedrehten Öffnung (7), in der die Breite (B) der Kavität die Breite (b) der Öffnung über die Längsrichtung der Schiene überschreitet, wobei die Kavität auf jeder Seite der Öffnung, die dem Boden (9) der Kavität gegenüberliegt, Wände (10, 11) aufweist, wobei der Lastträgerfuß ein Basisteil (13) aufweist, das sich durch die Öffnung in Richtung des Bodens der Kavität erstreckt, und eine Befestigungsvorrichtung (29) umfasst, die mittels einer Klemmvorrichtung (51) zum Klemmkontakt mit den Wänden aufwärts bewegt wird, wenn das Basisteil an der Profilschiene gesichert ist, **dadurch gekennzeichnet, dass** ein Verbindungsmittel (25, 30) fest mit der Verriegelungsvorrichtung (29) verbunden und drehbar mit dem Basisteil (13) verbunden ist und dass ein elastischer Körper (24) zwischen dem Basisteil und dem Verbindungsmittel liegt, der das Verbindungsmittel und die Verriegelungsvorrichtung in eine Stellung dreht, in der die Verriegelungsvorrichtung transversal bezüglich der Längsrichtung (Fig. 7) der Profilschiene liegt, wenn das Basisteil an der Kavität angebracht ist und sich die Verriegelungsvorrichtung in dieser Stellung sicher(lich) in Kontakt mit den Wänden (10, 11) befindet, wenn die Verriegelungsvorrichtung durch die Klemmvorrichtung (51) gegen die Wände geklemmt ist.

2. Lastträgerfuß nach Anspruch 1, **dadurch gekennzeichnet, dass** die Verbindungsmittel (25, 30) einen Steuerarm (32) aufweisen, der auf der Seite des Basisteils liegt, die außerhalb der Kavität der Profilschiene liegt.

3. Lastträgerfuß nach Anspruch 2, **dadurch gekennzeichnet, dass** der Steuerarm (32) eine Indikationsstellung (Fig. 2) aufweist, wenn die Verriegelungsvorrichtung (29) von dem elastischen Körper (24) in die Stellung bewegt wird, in der sie sich sicher(lich) beim Festgeklemmtsein durch die Klemmvorrichtung in Eingriff mit den Wänden befindet.

4. Lastträgerfuß nach einem der vorherigen Ansprüche, **dadurch gekennzeichnet, dass** die elastische Vorrichtung aus einer Torsionsfeder (24) besteht.

5. Lastträgerfuß nach einem der vorherigen Ansprüche, **dadurch gekennzeichnet, dass** die Verbindungsmittel (25, 30) mit dem Steuerarm (32) entgegen der von dem elastischen Körper (24) ausgeübten Kraft aus der Indikationsstellung in eine zweite Stellung (Fig. 8) verdreht werden, in der sich die Verriegelungsvorrichtung im Wesentlichen in der gleichen Richtung erstreckt wie das Basisteil, wobei das Basisteil in die Öffnung der Profilschiene hinein und aus ihr heraus bewegt werden kann.

## Revendications

1. Pied de porte-charge (5) destiné à relier une barre de porte-charge (4) à un profil en rail allongé (3) d'un véhicule (1) présentant, dans la direction longitudinale (L) du rail, une cavité allongée (6), avec une ouverture orientée vers le haut (7), dans lequel la largeur (B) de la cavité transversalement à la direction longitudinale du rail excède la largeur (b) de l'ouverture, de telle sorte que la cavité sur chaque côté de l'ouverture comporte des parois (10, 11), qui sont orientées face au fond (9) de la cavité, de telle sorte que le pied de porte-charge comporte une partie de base (13), qui s'étend à travers l'ouverture vers le fond de la cavité, et comprenant un dispositif de fixation (29) qui, au moyen d'un dispositif de blocage (51) est déplacé vers le haut en contact de blocage avec les parois lorsque la partie de base est fixée sur le profil en rail, **caractérisé en ce qu'**un moyen de liaison (25, 30) est relié fermement au dispositif de verrouillage (29) et relié de manière à pouvoir tourner à la partie de base (13), et **en ce qu'**un corps élastique (24) est situé entre la partie de base et le moyen de liaison, ce qui fait tourner le moyen de liaison et le dispositif de verrouillage vers une position dans laquelle le dispositif de verrouillage est positionné transversalement par rapport à la direction longitudinale (figure 7) du profil en rail lorsque la partie de base est montée dans la cavité, et dans laquelle position, le dispositif de verrouillage est, de manière certaine, en contact avec les parois (10, 11) lorsque le dispositif de verrouillage, par le dispositif de blocage (51), est bloqué contre les parois.

2. Pied de porte-charge selon la revendication 1, **caractérisé en ce que** le moyen de liaison (25, 30) comporte un bras de commande (32) qui est situé sur le côté de la partie de base qui est située à l'extérieur de la cavité des profils en rail.

3. Pied de porte-charge selon la revendication 2, **caractérisé en ce que** le bras de commande (32) est placé dans une position indicatrice (figure 2) lorsque le dispositif de verrouillage (29) est déplacé par le corps élastique (24) vers la position dans laquelle il est couplé de manière certaine avec les parois, lorsqu'il est bloqué par le dispositif de blocage.

4. Pied de porte-charge selon l'une quelconque des revendications précédentes, **caractérisé en ce que** le dispositif élastique consiste en un ressort de torsion (24).

5. Pied de porte-charge selon l'une quelconque des revendications précédentes, **caractérisé en ce que** le moyen de liaison (25, 30) avec le bras de commande (32) peut être tordu contre l'action du corps élastique (24), à partir de la position d'indication vers une seconde position (figure 8) dans laquelle le dispositif de verrouillage s'étend sensiblement dans la même direction que la partie de base, dans lequel la partie de base peut être introduite dans l'ouverture du profil en rail et ressortie de celle-ci.
